# EUROPEAN PATENT SPECIFICATION

(11) **EP 2 514 295 B1**
(45) Date of publication and mention of the grant of the patent: **11.10.2017**
(21) Application number: 10837367.1
(22) Date of filing: 02.11.2010
(51) Int. Cl.: A01D 34/64, A01D 34/76, A01D 69/08, A01D 34/82

(54) **CUTTING BLADE CLUTCH FOR MOWER**
SCHNEIDKLINGENKUPPLUNG FÜR MÄHER
EMBRAYAGE DE LAME DE COUPE POUR FAUCHEUSE

(30) Priority: 17.12.2009 JP 2009286308
(43) Date of publication of application: 24.10.2012
(73) Proprietor: Chikusui Canycom, Inc., Fukuoka 839-1396 (JP)
(72) Inventor: GONDOU, Yukihiko, Ukiha-shi Fukuoka 839-1396 (JP); IKEDA, Katuhisa, Ukiha-shi Fukuoka 839-1396 (JP)
(74) Representative: Gill Jennings & Every LLP
(86) International application number: PCT/JP2010/069457
(87) International publication number: WO 2011/074337

(56) References cited:
- JP-A- 5 076 233
- JP-A- 8 126 424
- JP-A- 8 126 424
- JP-U- 63 174 626
- US-A- 3 771 296
- US-A- 5 195 307
- US-A- 5 238 267
- US-A- 6 131 380
- US-B1- 6 779 325

## Description

### Technical Field

The present invention relates to a cutting blade clutch for a mower, and in particular, relates to a cutting blade clutch for a riding mower enabled to disconnect the power of the mowing machine instantaneously in an emergency by disposing a clutch lever of the mowing machine directly under the steering wheel of the operator's seat of the riding mower.

### Background Art

Generally, a riding mower has a structure in which a mowing machine for mowing is provided in a lower portion of a running body, an engine is disposed in a forward portion or backward portion of the running body, and a mission case is disposed close to the engine to drive the mowing machine and also is structured to do mowing work by running the running body by driving the front wheel or the rear wheel with a driving force from the mission case.

A technology described in Patent Literature 1 is known as a technology of such a mower.

Patent Literature 1: Japanese Patent Application Laid-Open No. 2002-27815

JP8126424 and US6779325 both disclose mower blade clutches.

Because the cutting blade clutch to turn on/turn off the power of a mowing machine is disposed on a side panel of the operator's seat in the conventional riding mower, and it is necessary to move an arm considerably from the steering wheel to operate the clutch, a problem is posed that the clutch cannot be disconnected smoothly.

Particularly if the rotary blade collides against an obstacle or the mowing machine becomes entangled during work, the power cannot be disconnected instantaneously, posing a problem of the damaged machine or causing a failure of the machine.

The present invention is made to solve such conventional problems and an object thereof is to provide a cutting blade clutch for a riding mower enabled to disconnect the power of a mowing machine instantaneously in an emergency by disposing a clutch lever of the mowing machine directly under a steering wheel of an operator's seat of the riding mower.

As a means for achieving the above object, the present invention provides a cutting blade clutch for a mower applied to a riding mower in which a mowing machine for mowing is mounted on a running body, wherein a clutch lever of a cutting blade is disposed below a round steering wheel of an operator' s seat, the clutch lever is constituted of a U-shaped lever mounted below the steering wheel and is freely rotatable in an up and down direction, the clutch lever is arranged to droop below the steering wheel when the power is disconnected, and a tip of the U-shaped lever is positioned directly under an outer edge of the steering wheel on a side of the operator's seat when the power is connected.

A cutting blade clutch for a mower according to claim 2 is the cutting blade clutch for a mower according to claim 1, wherein power is connected by lifting the clutch lever and the power is disconnected by lowering the clutch lever.

A cutting blade clutch for a mower according to claim 3 is the cutting blade clutch for a mower according to claim 1 or 2, wherein if the clutch lever is pushed down to pass a predetermined region when the power is disconnected, the clutch lever and a tension roller return to a power disconnection position due to a returning force of the tension roller constituting a clutch mechanism.

A cutting blade clutch for a mower according to claim 4 is the cutting blade clutch for a mower according to any one of claims 1 to 3, wherein a brake is applied to a rotary blade of the mowing machine when the power of the cutting blade clutch is disconnected.

### Advantageous Effects of Invention

By adopting the above configuration, the present invention achieves the following effects:
The clutch lever of the cutting blade is disposed below the steering wheel of the operator's seat in the cutting blade clutch for a mower according to claim 1, and therefore, if the mowing machine fails or is under an overload, the hand can be taken off the steering wheel instantaneously to disconnect the clutch.

A conventional cutting blade clutch is disposed on a so-called side panel on the side of the operator's seat and it takes time to operate the clutch after taking the hand off the steering wheel, but the operation time can be reduced according to the present invention.

The power is connected by lifting the clutch lever and the power is disconnected by lowering the clutch lever in the cutting blade clutch for a mower according to claim 2, and therefore, the clutch can be disconnected by simply taking the hand off the steering wheel and directly lowering the hand when the power is disconnected.

If the clutch lever is pushed down to pass a predetermined region when the power is disconnected in the cutting blade clutch for a mower according to claim 3, the clutch lever and the tension roller return to the power disconnection position due to the returning force of the tension roller, and therefore, the power can completely be disconnected by moving the clutch lever slightly when the clutch is disconnected.

That is, there is no need to manually operate up to the final position to which the clutch returns and the power can be disconnected by pushing down a short distance or operating the clutch lever just like patting from above.

The clutch lever which is freely rotatable in the up and down direction is constituted of the U-shaped lever mounted below the steering wheel in the cutting blade clutch for a mower according to claim 4, and therefore, a clutch operation can be performed by holding the tip or the side of the U-shaped lever.

Because the U-shaped lever droops below the steering wheel when the power is disconnected and the tip of the U-shaped lever is positioned directly under the outer edge of the round steering wheel on the side of the operator' s seat when the power is connected, and therefore, a clutch operation can be performed smoothly by taking the hand off the steering wheel. Moreover, the clutch lever is positioned directly under the steering wheel, and therefore, the clutch lever does not pose an obstacle to the operator when getting on the running body or doing mowing work.

The brake is applied to the rotary blade of the mowing machine when the power of the cutting blade clutch is disconnected in the cutting blade clutch for a mower according to claim 5, and therefore, the rotary blade is reliably damped in conjunction with the disconnection operation of the clutch lever so that damage and failures of the machine can be prevented.

### Description of Embodiments

A preferred embodiment to realize a cutting blade clutch for a mower according to the present invention will be described based on drawings.

### First embodiment

First, an overall configuration of a riding mower to which a clutch structure according to the present invention is applied will be described.

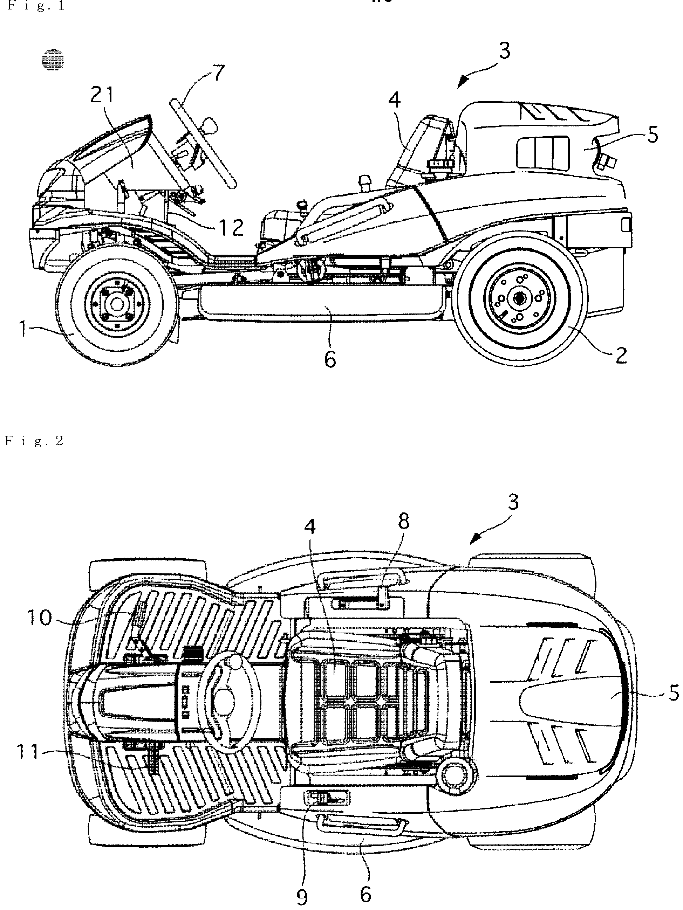

FIG. 1 is a side view of a riding mower to which the present invention is applied and FIG. 2 is a plan view of the riding mower to which the present invention is applied.

As shown in FIGS. 1 and 2, the riding mower includes a running body 3 including front and rear wheels 1 and 2, an operator's seat 4 installed in the center of the running body 3, an engine 5 mounted in a rear portion of the running body 3, and a mowing machine 6 disposed in a lower portion of the running body 3.

A steering wheel 7 is disposed in front of the operator's seat 4.

A hydraulic non-stage transmission (HST) is mounted below the engine 5 and output (driving force) from the engine 5 is transmitted to the HST, transmitted to the transmission after being gear-shifted continuously, and output to the rear wheel after being further decelerated by the transmission to run the running body.

The front wheel 1 and the steering wheel 7 are linked and coupled by a steering mechanism and the running body is structured to steer by providing a turn angle to the front wheel by operating (rotating) the steering wheel 7. Further, the mowing machine 6 is freely vertically slidably provided in the lower portion of the running body 3. The mowing machine 6 is configured to be able to go up and down to adjust the mowing height to the optimal height.

The mowing machine 6 contains a cutting blade freely rotatably supported pivotally and is structured (as a rotary cutter) to mow grass or the like by the rotating cutting blade by rotating the cutting blade by transmitting a driving force from the engine 5.

A sub-gear shifting lever for gear-shifting operation (running speed shifting of the running body) of the transmission, a vertical lifting lever 8 to operate the vertical slide (lifting) of the mowing machine, and an HST lever 9 to adjust the running speed are provided on the side panel and also a travel pedal 10 and a brake pedal 11 are freely depressably provided on the floor of the running body 3.

With the above structure, the operator sits in the operator's seat 4 to lower the mowing machine 6 to a height at which grass or the like can be mowed by operating the vertical lifting lever 8, rotate the cutting blade by operating a cutting blade clutch lever 12, select and set the travel speed by the sub-gear shifting lever, and depress the travel pedal 10 to run the running body 3 and can also do mowing work by the mowing machine 6 while running the running body 3 by steering the running body 3 through the steering wheel 7.

The travel pedal 10 can be depressed forward or backward from the neutral position and the HST is operated by depression of the travel pedal 10, and the travel pedal 10 is structured to move the running body 3 forward by depressing the pedal forward and to move the running body 3 backward by depressing the pedal backward. While a brake is applied to the rear wheel via the transmission by a force from the HST after the travel pedal 10 being set to the neutral position, the brake can be applied in the transmission by the brake pedal 11 if necessary.

Next, a clutch structure of a riding mower will be described.

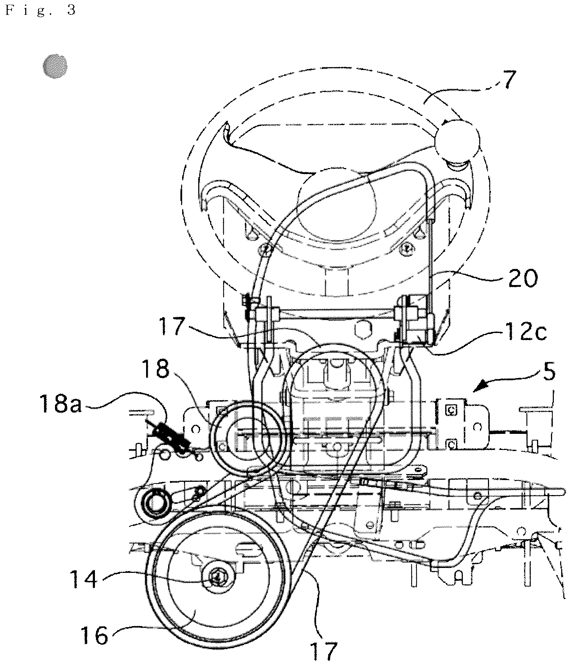

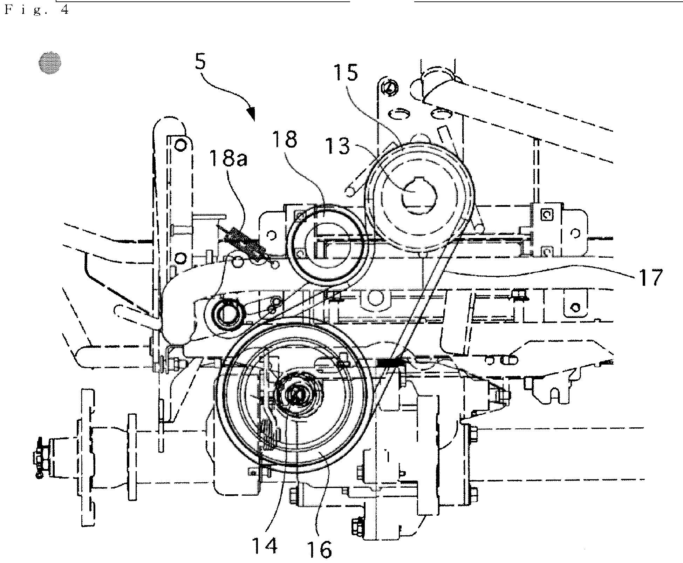

FIG. 3 is a schematic rear view of the riding mower and FIG. 4 is an explanatory view of a clutch structure.

As shown in FIGS. 3 and 4, a driving shaft 13 of the engine and a rotating shaft 14 to transmit the power to the mowing machine are projected on the back face of the riding machine toward the rear side and pulleys 15 and 16 are installed on the shafts respectively.

Two belts 17 are put between the drive pulley 15 of the engine 5 and the rotation pulley 16 of the cutting blade and the power of the engine 5 is transmitted to the cutting blade via the belts 17.

A tension roller 18 is disposed between the drive pulley 15 and the rotation pulley 16, and the tension roller 18 presses the belt 17 to give tension to the belt 17 so that the power is transmitted from the drive pulley 15 to the rotation pulley 16. If the tension roller 18 is moved toward the belt pressing direction by operating the clutch lever 12, tension is generated in the belt 17 and the power is transmitted from the drive pulley 15 to the rotation pulley 16.

Next, the shape and function of the clutch lever 12 will be described.

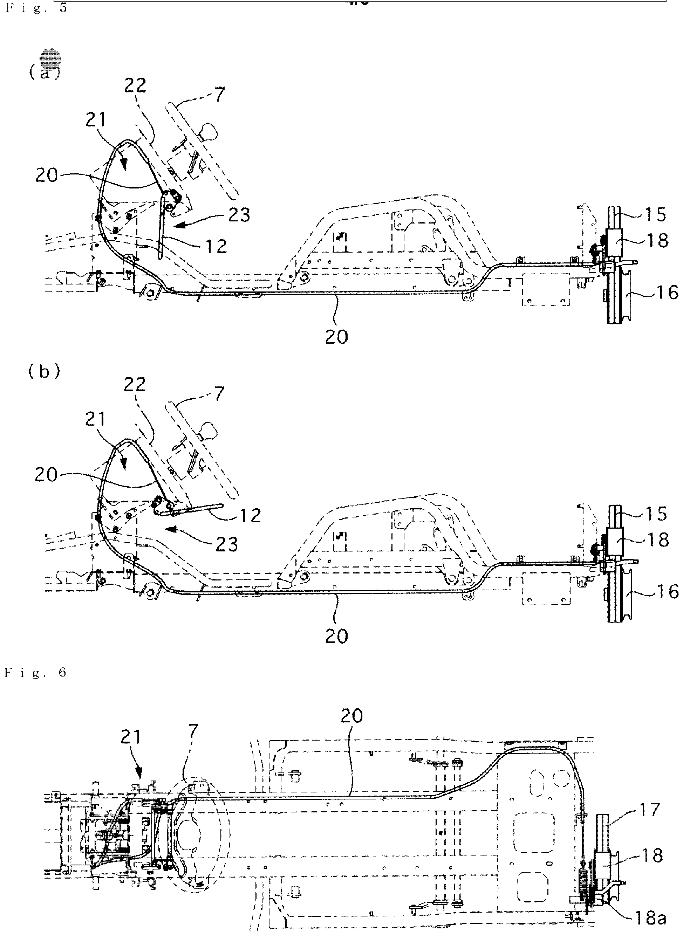

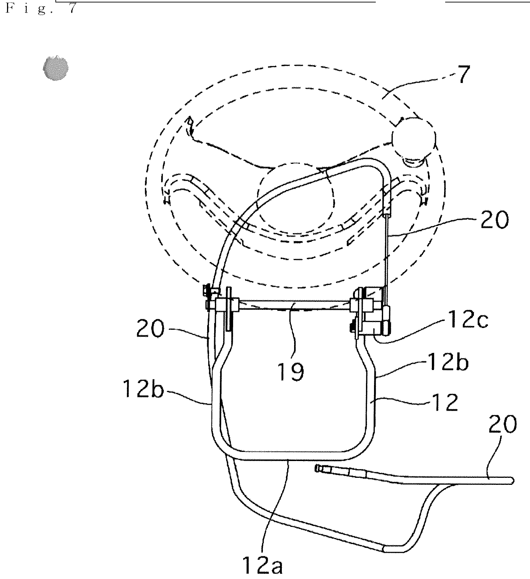

FIG. 5 is a side view showing arrangement positions of a clutch lever and a clutch wire, FIG. 6 is a plan view showing the arrangement position of the clutch wire, and FIG. 7 is a front view showing a mounting state of the clutch lever.

The clutch lever 12 is, as shown in FIG. 7, a lever produced by bending a metallic rod-like structure into a U-shape and includes a linear tip side 12a arranged in a left and right side of the body and left and right sides 12b bent by substantially 90 degrees in a rounded shape from both ends of the tip side 12a.

The base of the clutch lever side 12b is pivotally attached to a shaft 19 inserted through the base of the steering wheel in the left and right direction and the clutch lever 12 is made freely rotatable in the range of substantially 90 degrees or 90 to 120 degrees while rising from the vertical direction to the side of the operator's seat with the attachment point set as a reference point. The rotation angle of the clutch lever 12 is appropriately set in accordance with the mounting position of the clutch lever 12 or the like.

In the present embodiment, the power is in a disconnected state when, as shown in FIG. 5A, the clutch lever 12 droops vertically and the power is in a connected state when, as shown in FIG. 5B, the clutch lever 12 is positioned slightly higher than the horizon.

To operate the mowing machine 6, the operator holds the tip side 12a or the side 12b of the clutch lever 12 in a U-shape and rotates and pulls up the clutch lever 12 toward the operator from below with the attachment point acting as a reference point to lock the lever slightly higher than the horizon (see FIG. 5B). With this operation, the tension roller 18 presses the belt 17 through a clutch wire 20 to connect the power.

In the state where the power is connected to the mowing machine 6 in FIG. 5B, the tip of the clutch lever 12 in the U-shape is positioned directly under an outer edge of the round steering wheel 7 on the operator's seat side. That is, the U-shaped lever extends substantially horizontally toward the operator and the tip of the clutch lever 12 in the U-shape is positioned a few centimeters below the lowest end of the round steering wheel 7.

To disconnect the power of the mowing machine 6, the operator pushes down the tip side 12a after taking a hand off the steering wheel 7 or applies a force to the clutch lever 12 in the U-shape by lightly patting from above and then, the clutch lever 12 droops to disconnect the power.

Because the clutch mechanism by the tension roller 18 is adopted in the present invention, the tension roller 18 is energized in a direction where the tension roller 18 separated from the belt 17 by a spring 18a.

Thus, if the clutch lever 12 is pushed down to pass a predetermined region when the power is disconnected, the tension roller 18 returns in a direction where the power is disconnected due to the returning force thereof.

Therefore, if the clutch lever 12 locked in the state of FIG. 5B is pushed down a few centimeters from the position by a manual operation, the locked state of the clutch lever 12 is unlocked and the clutch lever 12 returns to the state of FIG. 5A by being energized by the returning force by the spring 18a of the tension roller 18. That is, the clutch is returned to the original position to reliably disconnect the power in an emergency only by applying a force just like patting about a few centimeters from above.

A publicly known technology can be adopted as the configuration to unlock the locked state of the clutch lever 12. As an example, a technology in which the mounting position of the wire 20 on the rotating shaft of the clutch lever 12 is adjusted, the clutch lever 12 is locked to the state of FIG. 5B by a tensile force of the tension roller 18 at a predetermined angle of rotation, and the clutch lever is pulled by a tensile force of the tension roller if the clutch lever 12 is pushed down by a predetermined angle to return to the original position is adopted.

Other publicly known technologies such as a configuration in which the clutch lever is locked by a locking groove, locking protrusion or the like, the locked state is unlocked by applying a slight force, and then the clutch lever is returned to the original position by the returning force of the tension roller can also be adopted as the configuration to unlock the locked state of the clutch lever 12.

A pin 12c is projected from the base of the clutch lever 12, the clutch wire 20 is connected via the pin 12c, the wire 20 extends forward in the vehicle inside a mounting seat of the steering wheel and then turns back to extend backward in the direction of the engine 5, and the tip thereof is connected to the tension roller 18.

If the pin 12c is rotated by the clutch lever 12 being pulled up, the clutch wire 20 is pulled and moved in a direction where the tension roller 18 presses the belt 17 and when the clutch lever 12 droops to send out the clutch wire 20, the tension roller 18 moves away from the belt 17 due to a repulsive force of the spring 18a.

Amounting seat 21 of the steering wheel is projected from the center in the forward portion of the running body 3 and the rotating shaft of the steering wheel 7 is inserted into the mounting seat 21 obliquely below in the forward direction and the round steering wheel 7 is projected from the mounting seat 21. The steering wheel surface of the round steering wheel 7 is inclined obliquely upward when viewed from the operator's seat.

The mounting seat 21 is a structure in a seating shape projected obliquely upward from the center tip of the running body toward the operator's seat, a front panel 22 parallel to the inclination of the steering wheel is disposed below the steering wheel, and side surfaces below the front panel 22 are covered with a cover.

The clutch lever 12 is freely rotatably mounted on the rear side of the front panel 22, which is the base of the steering wheel 7, droops from the mounting portion, and rotates from the drooping position up to the substantially horizontal direction in the direction of the operator's seat.

For the operation, the operator sits in the seat and extends both feet toward pedals disposed on the left and right sides of the mounting seat 21 to ride the running body 3 while the mounting seat 21 being sandwiched between left and right feet. Because the mounting seat 21 is projected obliquely upward from the front toward the operator's seat 4, a space 23 is formed between the underside of the mounting seat 21 and the body. The clutch lever 12 is disposed in the space 23 and so the position of the clutch lever 12 does not pose any obstacle to work by the operator and smooth operability is realized.

Incidentally, a handle tilt mechanism is disposed in the mounting seat so that the position of the steering wheel can be adjusted.

The handle tilt mechanism is configured so that the steering wheel and the clutch lever move together and the spatial relationship between the steering wheel and the clutch lever is always the same.

A brake shoe (not shown) is installed on an inner edge of the pulley 16 of the rotating shaft 14 of the mowing machine 6 to constitute a drum brake. The drum brake damps the rotation by the brake shoe being brought slidingly into contact with an inner circumferential surface of the pulley 16 (drum) to cause friction.

If the power is disconnected by pushing down the clutch lever 12, the tension roller 18 is moved away from the belt 17 by the spring 18a and at the same time, the brake shoe damps the pulley 16 to stop the rotary blade of the mowing machine.

When the tension roller 18 presses the belt 17 to transmit the power, the brake shoe moves away from the pulley 16 to release the brake.

Next, the operation of the present invention will be described.

The operator sits in the operator's seat 4, lowers the mowing machine 6 to a height at which grass or the like can be mowed by operating the vertical lifting lever 8, operates the rotary blade, selects and sets the travel speed by the sub-gear shifting lever, and tilts the HST lever 9 to run the running body and also to steer the steering wheel.

If the operator holds the tip side 12a or the side 12b of the clutch lever 12 in a U-shape and rotates and pulls up the clutch lever 12 toward the operator to lock the lever slightly higher than the horizon, the tension roller 18 presses the belt 17 to transmit the power from the drive pulley 15 to the rotation pulley 16 so that the cutting blade rotates to do mowing work.

In this case, the U-shaped clutch lever 12 is disposed below the steering wheel 7, and therefore, the lever can easily be operated by holding one end thereof.

If the mowing machine 6 fails during the work of mowing, the clutch lever 12 is pushed down or a force is applied from above just like patting. Then, the tension roller 18 moves in a direction where the power is disconnected due to the returning force thereof and the clutch lever 12 rotates like being pushed back downward to return to the position in FIG. 5A.

Because the tip side 12a of the U-shaped clutch lever 12 is positioned directly under an outer edge of the round steering wheel 7 on the operator's seat side, the clutch lever 12 and the steering wheel 7 are close to each other and the line of movement of a hand for disconnecting the power is shortened so that the clutch lever can be pushed down quickly and smoothly in an emergency.

The brake shoe damps the pulley 16 to stop the rotary blade of the mowing machine in conjunction with the power disconnection operation of the clutch lever.

An embodiment has been described above, but the concrete configuration of the present invention is not limited to the above embodiment and design modifications without deviating from the scope of the invention are included in the present invention.

For example, the U-shaped clutch lever 12 is described in the above embodiment, but a lever in a circular shape, elliptic shape or other shapes can also be adopted if configured to be disposed below the steering wheel 7 of the operator' s seat.

The steering wheel 7 is assumed to be circular in the above embodiment, the same operation is achieved when applied to a steering wheel having a shape other than the circular shape.

### Brief Description of Drawings

FIG. 1 is a side view of a riding mower to which the present invention is applied.
FIG. 2 is a plan view of the riding mower to which the present invention is applied.
FIG. 3 is a schematic rear view of the riding mower.
FIG. 4 is an explanatory view of a clutch structure.
FIG. 5 is a side view showing arrangement positions of a clutch lever and a clutch wire
FIG. 6 is a plan view showing the arrangement position of the clutch wire.
FIG. 7 is a front view showing a mounting state of the clutch lever.

### Reference Signs List

- 1: Front wheel
- 2: Rear wheel
- 3: Running body
- 4: Operator's seat
- 5: Engine
- 6: Mowing machine
- 7: Steering wheel
- 8: Vertical lifting lever
- 9: HST lever
- 10: Travel pedal
- 11: Brake pedal
- 12: Clutch lever
- 12a: Tip side
- 12b: Side
- 12c: Pin
- 13: Driving shaft
- 14: Rotating shaft
- 15: Pulley
- 16: Pulley
- 17: Belt
- 18: Tension roller
- 18a: Spring
- 19: Shaft
- 20: Wire
- 21: Mounting seat
- 22: Front panel
- 23: Space

## Claims

1. A cutting blade clutch for a mower applied to a riding mower in which a mowing machine (6) for mowing is mounted on a running body (3), wherein
a clutch lever (12) of a cutting blade is disposed below a round steering wheel (7) of an operator's seat (4), **characterised in that** the clutch lever is constituted of a U-shaped lever mounted below the steering wheel and is freely rotatable in an up and down direction,
the clutch lever is arranged to droop below the steering wheel when the power is disconnected, and
a tip of the U-shaped lever is positioned directly under an outer edge of the steering wheel on a side of the operator's seat when the power is connected.

2. The cutting blade clutch for a mower according to claim 1, wherein power is connected by lifting the clutch lever (12) and the power is disconnected by lowering the clutch lever.

3. The cutting blade clutch for a mower according to claim 1 or 2, arranged such that, if the clutch lever (12) is pushed down to pass a predetermined region when the power is disconnected, the clutch lever and a tension roller (18) return to a power disconnection position due to a returning force of the tension roller constituting a clutch mechanism.

4. The cutting blade clutch for a mower according to any one of claims 1 to 3, arranged such that a brake is applied to a rotary blade of the mowing machine when the power of the cutting blade clutch is disconnected.

## Patentansprüche

1. Schneidklingenkupplung für einen Mäher, angewandt auf einen Aufsitzmäher, in dem eine Mähmaschine (6) zum Mähen auf eine Laufkarosserie (3) montiert ist, wobei
ein Kupplungshebel (12) einer Schneidklinge unter einem runden Lenkrad (7) eines Bedienersitzes (4) angeordnet ist,
**dadurch gekennzeichnet, dass**
der Kupplungshebel aus einem U-förmigen Hebel besteht, der unter dem Lenkrad montiert und in einer Auf-Ab-Richtung frei beweglich ist,
der Kupplungshebel so angeordnet ist, dass er unter das Lenkrad herunterhängt, wenn die Antriebskraft getrennt ist, und
eine Spitze des U-förmigen Hebels direkt unter einem äußeren Rand des Lenkrads auf einer Seite des Bedienersitzes positioniert ist, wenn die Antriebskraft verbunden ist.

2. Schneidklingenkupplung für einen Mäher gemäß Anspruch 1, wobei die Antriebskraft durch Anheben des Kupplungshebels (12) in Verbindung gebracht wird und die Antriebskraft durch Absenken des Kupplungshebels getrennt wird.

3. Schneidklingenkupplung für einen Mäher gemäß Anspruch 1 oder 2, so angeordnet, dass, wenn der Kupplungshebel (12) beim Trennen der Antriebskraft heruntergedrückt wird, um einen festgelegten Bereich zu durchlaufen, der Kupplungshebel und eine Spannrolle (18) aufgrund einer Rückstellkraft der Spannrolle zu einer Position mit getrennter Antriebskraft zurückkehren, was einen Kupplungsmechanismus darstellt.

4. Schneidklingenkupplung für einen Mäher gemäß einem der Ansprüche 1 bis 3, so angeordnet, dass eine Bremse auf eine rotierende Klinge der Mähmaschine angewandt wird, wenn die Antriebskraft der Schneidklingenkupplung getrennt ist.

## Revendications

1. Embrayage de lame de coupe pour une tondeuse, appliqué à une tondeuse autoportée, dans laquelle une tondeuse (6) est montée sur un châssis (3), dans lequel
un levier d'embrayage (12) d'une lame de coupe est disposé sous un volant de direction rond (7) du siège de l'opérateur (4)
**caractérisé en ce que**
le levier d'embrayage se compose d'un levier en U monté sous le volant de direction, et pouvant tourner librement vers le haut et vers le bas,
le levier d'embrayage étant agencé pour retomber sous le volant après le débrayage, et
un bout du levier en U étant positionné directement sous un bord extérieur du volant, d'un côté du siège de l'opérateur lorsque l'on a embrayé.

2. Embrayage de lame de coupe pour une tondeuse selon la revendication 1, l'embrayage s'effectuant en levant le levier d'embrayage (12), et le débrayage s'effectuant en baissant le levier d'embrayage.

3. Embrayage de lame de coupe pour une tondeuse selon la revendication 1 ou 2, agencé de sorte que, lorsque l'on pousse le levier d'embrayage (12) vers le bas, pour passer au-dessus d'une zone après avoir débrayé, le levier de débrayage et un rouleau tendeur (18) retournent dans une position de débrayage sous l'effet de la force de retour du rouleau tendeur constituant un mécanisme d'embrayage.

4. Embrayage de lame de coupe pour une tondeuse selon une quelconque des revendications 1 à 3, agencé de façon à mettre un frein sur une lame rotative de la tondeuse après avoir procédé au débrayage de la lame de coupe.
